# FASCICULE DE BREVET EUROPEEN

(11) **EP 2 594 892 B1**
(45) Date de publication et mention de la délivrance du brevet: **09.10.2019**
(21) Numéro de dépôt: 12192950.9
(22) Date de dépôt: 16.11.2012
(51) Int. Cl.: G01B 5/008, G01B 21/04, B25J 19/00, F16C 11/10

(54) **Appareil de mesure comportant un bras à verrouillage indexé**
Messapparat umfassend einen Arm mit Sperrklinke
Measuring device comprising an arm with a ratchet mechanism

(30) Priorité: 18.11.2011 FR 1160548
(43) Date de publication de la demande: 22.05.2013
(73) Titulaire: Hexagon Metrology SAS, 91978 Courtaboeuf Cedex (FR)
(72) Inventeur: Duportal, Thibault, 41310 PRUNAY CASSEREAU (FR); Famechon, Jean-Luc, 41100 VILLERABLE (FR)
(74) Mandataire: Parzy, Benjamin Alain

(56) Documents cités:
- WO-A1-00/34733
- WO-A2-2008/066896
- WO-A2-2011/057130
- US-A1- 2010 180 709
- US-A1- 2011 219 633

## Description

La présente invention concerne un appareil de mesure comportant un bras articulé. Un tel appareil de mesure est utilisé par exemple pour vérifier les cotes d'une pièce par exemple dans le cadre d'opérations de contrôle de qualité. Il est connu des appareils de mesure comme ceux décrits dans les documents brevets WO 00/34733, WO 2008/066896 et WO 2011/057130. Il est connu des appareils de mesure comportant une embase sur laquelle est montée pour pivoter autour d'un axe horizontal une première extrémité d'un bras articulé ayant une deuxième extrémité pourvue d'un organe de pointage tel qu'un palpeur ou un émetteur de faisceau laser. La deuxième extrémité du bras est également pourvue d'une poignée de manipulation qui permet à l'opérateur d'appliquer le palpeur contre la surface de l'objet à mesurer ou de diriger l'émetteur de faisceau laser vers une portion de l'objet à mesurer. Le bras articulé comprend généralement un premier segment articulé d'un côté à l'embase et de l'autre à un deuxième segment ayant une extrémité libre pourvue d'un poignet articulé emportant la poignée de manipulation et l'organe de pointage. Dans ces appareils de mesure, le bras articulé est généralement conçu pour avoir une position stable de repos ou d'inutilisation dans laquelle le premier segment s'étend sensiblement verticalement en butée contre une portion de l'embase et le deuxième segment est rabattu contre le premier segment. Dans cette position, le centre de gravité de l'ensemble segments, poignet, poignée de manipulation et organe de pointage s'étend sensiblement à l'aplomb de l'embase et tend à maintenir le premier segment en butée contre l'embase assurant ainsi la stabilité dudit ensemble. Toutefois, un choc accidentel sur le bras risque de lui faire quitter sa position de repos, le bras basculant alors sous l'effet de son propre poids en amorçant un mouvement de descente jusqu'à ce que le bras heurte un obstacle. Ce type de choc peut aboutir à une détérioration de l'organe de pointage mais également des organes de guidage des mouvements du bras et, plus généralement, de la structure du bras dans son ensemble.

Il est connu de monter un vérin élastique entre l'embase et le premier segment du bras pour compenser le poids du bras. Ce vérin a accessoirement pour effet de renforcer la stabilité du bras en position de repos.

Si le risque d'un basculement accidentel du bras est alors réduit, il n'en reste pas moins important.

Pour réduire encore ce risque, certains appareils de mesure comprennent un organe de blocage du coulissement de la tige du vérin. Cet organe de blocage a la forme d'une entretoise amovible ayant une section transversale sensiblement en forme de U qui est engagée sur la tige du vérin lorsque le bras est en position de repos de telle manière que l'entretoise s'oppose à un rapprochement du corps du vérin et de l'extrémité libre de la tige du vérin. Il existe cependant un risque de perte de l'entretoise, auquel cas le blocage du bras n'est plus possible, ou, au contraire, d'omission de l'entretoise sur la tige alors que l'opérateur exerce un effort sur le bras tendant à le faire quitter sa position de repos, auquel cas le bras et l'entretoise subissent des contraintes risquant de les fragiliser voire les détériorer.

Un but de l'invention est de fournir un appareil de mesure ayant une position de repos plus stable.

A cet effet, on prévoit, selon l'invention, un appareil de mesure tel que revendiqué dans la revendication 1, l'appareil de mesure comprenant entre autres une embase sur laquelle est montée pour pivoter, autour d'un axe horizontal, entre une position haute et une position basse, une première extrémité d'un bras articulé ayant une deuxième extrémité pourvue d'un organe de pointage. Un dispositif de blocage en position est monté entre l'embase et la première extrémité, le dispositif de blocage en position comprenant un cliquet monté pour s'opposer à un mouvement du bras vers la position basse et relié à des moyens de débrayage du cliquet, les moyens de débrayage du cliquet comprenant un actionneur électromécanique relié au cliquet par une chaîne de transmission mécanique pour déplacer celui-ci.

Ainsi, le cliquet constitue un moyen simple et fiable de blocage du bras en position assurant un verrouillage indexé du bras en position. Le cliquet, lorsqu'il est embrayé, s'oppose ainsi à un mouvement du bras vers la position basse empêchant la chute du bras et les détériorations qui peuvent en résulter.

D'autres caractéristiques et avantages de l'invention ressortiront à la lecture de la description qui suit de modes de réalisation particuliers non limitatifs de l'invention. Le champ de l'invention est défini dans les revendications 1 à 16.

Il sera fait référence aux dessins annexés, parmi lesquels :
- la figure 1 est une vue en perspective d'un appareil de mesure conforme à l'invention, le bras étant en position haute de repos,
- la figure 2 est une vue partielle en perspective d'une armature de ce bras en position haute,

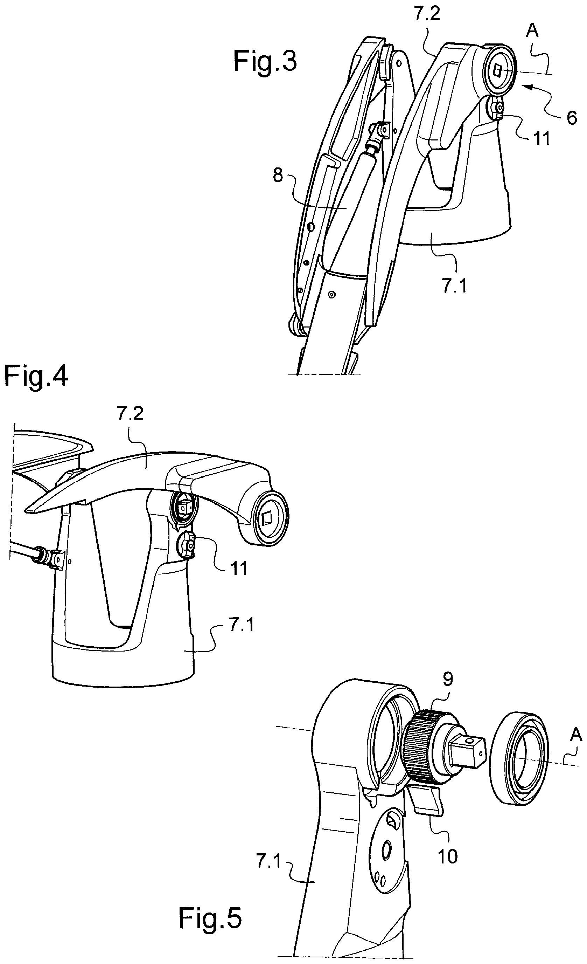

- la figure 3 est une vue partielle en perspective de l'armature du bras dans une position basse,
- la figure 4 est une vue partielle en perspective du bras avec un éclaté montrant le dispositif à cliquet,
- la figure 5 est une vue partielle en perspective avec un éclaté du dispositif à cliquet,

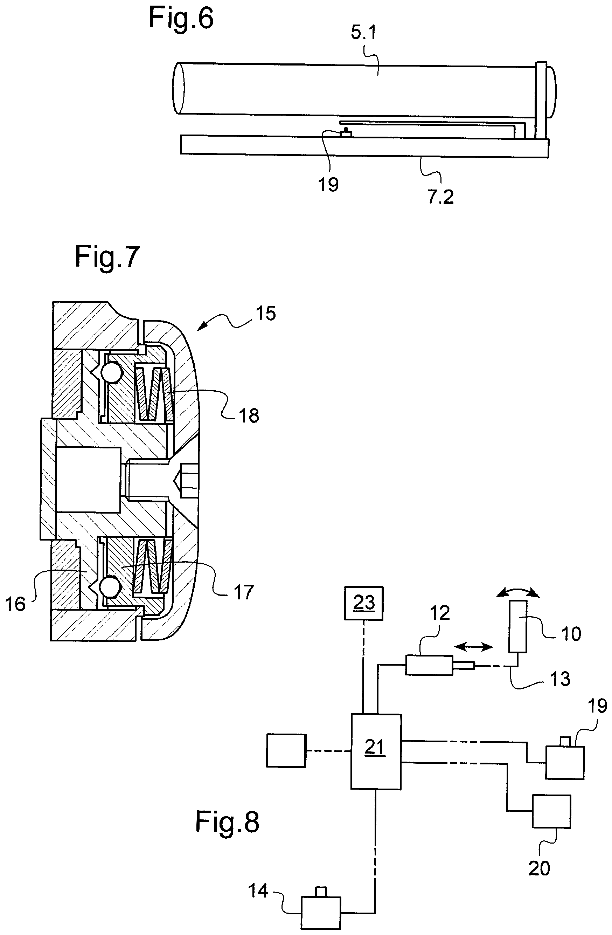

- la figure 6 est une vue schématique en élévation montrant la déflection du premier segment du bras,
- la figure 7 est une vue partielle en coupe montrant le limiteur de couple,
- la figure 8 est une vue schématique montrant le circuit de commande d'un actionneur de débrayage du cliquet.

En référence aux figures, l'appareil de mesure conforme à l'invention comprend une embase 1 sur laquelle est montée pour pivoter, autour d'un axe horizontal A, entre une position haute et une position basse, une première extrémité 2.1 d'un bras articulé, généralement désigné en 2, ayant une deuxième extrémité 2.2 pourvue d'un poignet articulé 3 sur lequel est fixé un organe de pointage 4.

Le bras 2 comporte plus précisément un premier segment 5.1 ayant une première extrémité formant la première extrémité 2.1 du bras 2 et une deuxième extrémité sur laquelle est articulée une première extrémité d'un deuxième segment 5.2 ayant une deuxième extrémité formant la deuxième extrémité 2.2 du bras 2.

L'agencement et la structure des articulations du bras 2, de l'embase 1 et du poignet 3 sont connus en eux-mêmes et ne seront donc pas détaillés ici.

Un dispositif de blocage en position, généralement désigné en 6, est monté entre l'embase et la première extrémité 2.1 du bras articulé 2.

Plus précisément, l'appareil comprend une armature articulée 7 comportant une partie fixe 7.1 rigidement fixée à l'embase 1 et une partie mobile 7.2 montée sur la partie fixe 7.1 pour s'étendre sous le premier segment 5.1 et pour pivoter autour de l'axe horizontal A. La partie fixe 7.1 a ici une forme tubulaire et est enfilée sur l'embase 1. Un vérin élastique 8 est monté entre les parties 7.1, 7.2 et tend à maintenir la partie 7.2 au contact du premier segment 5.1. L'armature articulée 7 forme une orthèse au niveau de l'articulation du bras 2 à l'embase 1.

Le dispositif de blocage en position comprend une roue dentée 9 coaxiale à l'axe A et solidaire en rotation de la partie mobile 7.2 et un cliquet 10 monté sur la partie fixe 7.1 pour être mobile entre une position active dans laquelle le cliquet est engagé entre deux dents de la roue dentée pour s'opposer à un mouvement du bras 2 vers la position basse et une position inactive dans lequel le cliquet 10 est dégagé de la roue dentée 9. Un bouton de commande mécanique 11, manuelle, est monté sur la partie fixe pour déplacer le cliquet 10 entre ses deux positions.

Le bouton de commande mécanique 11 fait partie de moyens de débrayage du cliquet 10 qui comprennent également un actionneur électromécanique 12 relié au cliquet 10 par une chaîne de transmission mécanique symbolisé en 13 pour déplacer celui-ci de sa position active à sa position inactive. L'actionneur électromécanique 12 est relié à une unité de commande 21 elle-même reliée à une source d'alimentation 22 telle que le secteur, l'alimentation du bras 2, ou une batterie. Un bouton de commande électrique 14 est monté sur la deuxième extrémité 2.2 du bras articulé 2 et est relié électriquement à l'unité de commande 21. L'actionneur électromécanique 12 est ici un actionneur électromagnétique comme un solénoïde, un moteur pas à pas ou un actionneur linéaire.

Enfin, les moyens de débrayage comprennent un limiteur de couple généralement désigné en 15. Le limiteur de couple 15 comprend une première platine 16 solidaire de la roue dentée 9 et une deuxième platine 17 solidaire de la partie mobile 7.2. Les platines 16, 17 sont en appui élastique l'une contre l'autre au moyen de rondelles élastiques 18 de type Belleville. La platine 17 comporte des logements pour recevoir des billes en saillie de la platine 16 de telle manière que lorsqu'un couple supérieur à un seuil prédéterminé est exercé sur le bras et donc sur la partie mobile 7.2 alors que le cliquet 10 est en prise avec la roue dentée 9, les billes puissent sortir de leurs logements en repoussant les platines l'une par rapport à l'autre à l'encontre de l'effort des rondelles élastiques, autorisant alors un pivotement relatif des platines 16, 17 l'une par rapport à l'autre.

Un capteur d'effort 19 est monté sur la partie mobile 7.2 au voisinage du premier segment 5.1 du bras 2 et est relié à un organe d'alerte 20. L'organe d'alerte 20 est par exemple un avertisseur lumineux ou voyant, un avertisseur sonore ou un élément vibrant monté sur la deuxième extrémité du bras. Le capteur d'effort 19 est monté pour détecter une flexion de la partie mobile 7.2. En variante, le capteur 19 peut être agencé pour mesurer une variation de l'écartement entre la partie mobile 7.2 et le segment 5.1.

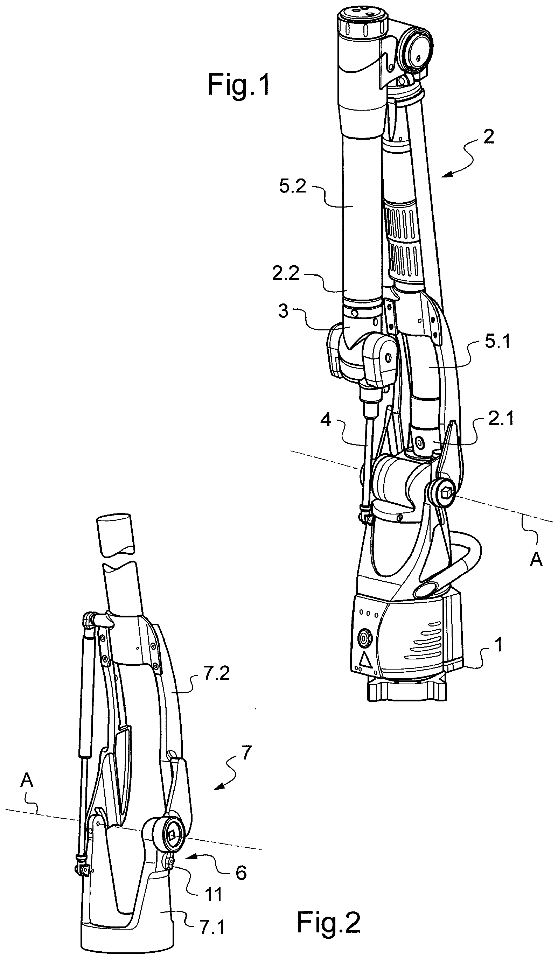

Les moyens de débrayage sont agencés pour pouvoir provoquer un embrayage du cliquet 10 et sont reliés à un capteur 23 de détection de la position haute de repos du bras 2 pour commander l'embrayage du cliquet 10 lorsque le bras 2 est en position de repos (voir sur les figures 1 et 2). De la même manière, il peut être prévu de détecter une position sensiblement fixe du bras pendant une durée prédéterminée et de commander alors l'embrayage automatique du cliquet 10 pour soulager l'opérateur.

L'unité de commande 21 est connue en elle-même et comprend par exemple un processeur programmé de manière connue en elle-même pour assurer les fonctions mentionnées ci-dessus.

Bien entendu, l'invention n'est pas limitée au mode de réalisation décrit mais englobe toute variante entrant dans le champ de l'invention telle que définie par les revendications.

En particulier, les moyens de débrayage peuvent avoir une structure différente de celle décrite et, par exemple, les moyens de débrayage comprennent un bouton de commande manuelle monté sur l'embase et relié électriquement à l'actionneur. Dans le cas où le bouton de commande est relié à l'actionneur par une liaison sans fil, le bouton de commande peut être monté à un endroit quelconque de l'appareil de mesure voire sur un élément extérieur à celui-ci.

En variante, l'actionneur électromécanique est un actionneur piézoélectrique.

La chaîne de transmission mécanique peut être réduite à sa plus simple expression : la tige de sortie d'un actionneur linéaire peut être reliée directement au cliquet 10.

Le limiteur de couple peut comprendre un anneau de frottement intercalé entre la roue dentée et l'axe sur lequel la roue dentée est montée, l'anneau de frottement étant agencé pour transmettre à la roue dentée un couple maximale inférieure à une valeur prédéterminée.

La liaison électrique du bouton de commande à l'actionneur peut comprendre des moyens de liaison filaires ou des moyens de liaison sans fil et par exemple infrarouge ou radiofréquence...

## Revendications

1. Appareil de mesure comportant une embase (1) et un bras articulé (2) ayant une première extrémité (2.1) du bras articulé (2) et une deuxième extrémité (2.2) du bras articulé (2), la deuxième extrémité (2.2) du bras articulé (2) étant pourvue d'un organe de pointage (3), la première extrémité (2.1) du bras articulé étant montée sur l'embase (1) pour pivoter, autour d'un axe horizontal (A), entre une position haute et une position basse, l'appareil de mesure comportant également un dispositif de blocage en position (6) monté entre l'embase (1) et la première extrémité (2.1) du bras (2), tel que le dispositif de blocage en position (6) comprend un cliquet (10) monté pour s'opposer à un mouvement du bras (2) vers la position basse, l'appareil de mesure étant **caractérisé en ce qu'**il comprend des moyens de débrayage du cliquet (10), le dispositif de blocage en position (6) étant relié à ces moyens de débrayage du cliquet (10), les moyens de débrayage du cliquet (10) comprenant un actionneur électromécanique (12) relié au cliquet (10) par une chaîne de transmission mécanique (13) pour déplacer celui-ci.

2. Appareil selon la revendication 1, dans lequel les moyens de débrayage comprennent un bouton de commande manuelle (11) relié électriquement à l'actionneur (12) et monté par exemple sur la deuxième extrémité du bras (2.2).

3. Appareil selon la revendication 2, dans lequel les moyens de débrayage comprennent un bouton de commande manuelle (11) monté sur l'embase (1) et relié électriquement à l'actionneur (12).

4. Appareil selon la revendication 1, dans lequel l'actionneur électromécanique est un actionneur piézoélectrique.

5. Appareil selon la revendication 1, dans lequel l'actionneur électromécanique (12) est un actionneur électromagnétique.

6. Appareil selon la revendication 5, dans lequel l'actionneur électromagnétique appartient au groupe d'actionneurs électromagnétiques comprenant un solénoïde, un moteur pas à pas et un actionneur linéaire.

7. Appareil selon la revendication 1, dans lequel les moyens de débrayage comprennent un limiteur de couple (15).

8. Appareil selon la revendication 7, dans lequel, le cliquet (10) étant lié à l'embase pour coopérer avec une roue dentée (9) liée à la première extrémité du bras, le limiteur de couple comprend une première platine (16) liée en rotation à la première extrémité du bras et une deuxième platine (17) liée en rotation à la roue dentée (9), les platines étant en appui élastique l'une contre l'autre, l'une des platines comportant un logement pour recevoir au moins une bille en saillie de l'autre platine de telle manière que lorsqu'un couple supérieur à un seuil prédéterminé est exercé sur le bras, la bille puisse sortir de son logement en autorisant un pivotement relatif des platines l'une par rapport à l'autre.

9. Appareil selon la revendication 7, dans lequel, le cliquet (10) étant lié à l'embase pour coopérer avec une roue dentée (9) liée à la première extrémité du bras, le limiteur de couple comprend un anneau de frottement intercalé entre la roue dentée et l'axe sur lequel la roue dentée est montée, l'anneau de frottement étant agencé pour transmettre à la roue dentée un couple maximale inférieure à une valeur prédéterminée.

10. Appareil selon la revendication 1, dans lequel un capteur d'effort (19) est monté sur un segment (5.1) du bras adjacent à la première extrémité et est relié à un organe d'alerte (20).

11. Appareil selon la revendication 10, dans lequel le capteur d'effort (19) est agencé pour mesurer une déformation dudit segment du bras.

12. Appareil selon la revendication 11, dans lequel une partie mobile (7.2) s'étend sous ledit segment (5.1) parallèlement à celui-ci en étant écartée du segment, le capteur étant monté entre la partie mobile et le segment pour détecter une variation de l'écartement entre la partie mobile et le segment.

13. Appareil selon la revendication 10, dans lequel l'organe d'alerte comprend l'un au moins des éléments suivant : un avertisseur sonore, un avertisseur lumineux, un élément vibrant monté sur la deuxième extrémité du bras.

14. Appareil selon la revendication 1, dans lequel les moyens de débrayage sont agencés pour pouvoir provoquer un embrayage du cliquet et sont reliés à un capteur de détection d'une position prédéterminée d'inutilisation du bras pour commander l'embrayage du cliquet lorsque le bras est en position d'inutilisation.

15. Appareil selon la revendication 1, dans lequel, l'appareil comprend :
- une partie fixe (7.1) rigidement fixée à l'embase (1) ; et
- une partie mobile (7.2) montée sur la partie fixe (7.1) pour pivoter autour de l'axe horizontal (A) ;
le dispositif de blocage en position (6) comprenant une roue dentée (9) coaxiale à l'axe horizontal (A) et solidaire en rotation de la partie mobile (7.2) et le cliquet (10) étant monté sur la partie fixe (7.1) pour être mobile entre une position active dans laquelle le cliquet est engagé entre deux dents de la roue dentée pour s'opposer à un mouvement du bras (2) vers la position basse et une position inactive dans lequel le cliquet (10) est dégagé de la roue dentée (9).

16. Appareil selon la revendication 15, comprenant une armature articulée (7), cette armature articulée comportant ladite partie fixe (5.1) et ladite partie mobile (7.2), cette partie mobile (7.2) étant montée sur la partie fixe (7.1) pour s'étendre sous un premier segment (5.1) du bras, ce premier segment (5.1) du bras ayant une première extrémité formant ladite première extrémité (2.1) du bras (2).

## Patentansprüche

1. Messgerät, umfassend eine Basis (1) und einen Gelenkarm (2), der ein erstes Ende (2.1) des Gelenkarms (2) und ein zweites Ende (2.2) des Gelenkarms (2) hat, wobei das zweite Ende (2.2) des Gelenkarms (2) mit einem Zielelement (3) versehen ist, wobei das erste Ende (2.1) des Gelenkarms auf der Basis (1) montiert ist, um sich um eine horizontale Achse (A) zwischen einer oberen Position und einer unteren Position zu verschwenken, wobei das Messgerät ferner eine Positionssperrvorrichtung (6) umfasst, die zwischen der Basis (1) und dem ersten Ende (2.1) des Arms (2) montiert ist, wobei die Positionssperrvorrichtung (6) eine Sperrklinke (10) umfasst, die gelagert ist, um sich einer Bewegung des Arms (2) in die untere Position zu widersetzen, wobei das Messgerät **dadurch gekennzeichnet ist, dass** es Ausrückmittel zum Ausrücken der Sperrklinke (10) umfasst, wobei die Positionssperrvorrichtung (6) mit diesen Mitteln zum Ausrücken der Sperrklinke (10) verbunden ist, wobei die Ausrückmittel zum Ausrücken der Sperrklinke (10) einen elektromechanischen Aktor (12) umfassen, der mit der Sperrklinke (10) über eine mechanische Übertragungskette (13) verbunden ist, um diese zu verschieben.

2. Gerät nach Anspruch 1, bei dem die Ausrückmittel einen manuellen Steuerknopf (11) umfassen, der elektrisch mit dem Aktor (12) verbunden und beispielsweise an dem zweiten Ende des Arms (2.2) montiert ist.

3. Gerät nach Anspruch 2, bei dem die Ausrückmittel einen manuellen Steuerknopf (11) umfassen, der an der Basis (1) montiert und elektrisch mit dem Aktor (12) verbunden ist.

4. Gerät nach Anspruch 1, bei dem der elektromechanische Aktor ein piezoelektrischer Aktor ist.

5. Gerät nach Anspruch 1, bei dem der elektromechanische Aktor (12) ein elektromagnetischer Aktor ist.

6. Gerät nach Anspruch 5, bei dem der elektromagnetische Aktor zu der Gruppe von elektromagnetischen Aktoren gehört, die ein Magnetventil, einen Schrittmotor und einen linearen Aktor umfasst.

7. Gerät nach Anspruch 1, bei dem die Ausrückmittel einen Drehmomentbegrenzer (15) umfassen.

8. Gerät nach Anspruch 7, bei dem unter Berücksichtigung, dass die Sperrklinke (10) mit der Basis verbunden ist, um mit einem Zahnrad (9) zusammenzuwirken, das mit dem ersten Ende des Arms verbunden ist, der Drehmomentbegrenzer eine erste Platte (16) umfasst, die drehfest mit dem ersten Ende des Arms verbunden ist, und eine zweite Platte (17), die drehfest mit dem Zahnrad (9) verbunden ist, wobei die Platten aneinander elastisch anliegen, wobei eine der Platten eine Aufnahme umfasst, um mindestens eine von der anderen Platte vorstehende Kugel derart aufzunehmen, dass, wenn ein Drehmoment, das größer als ein vorbestimmter Schwellenwert ist, auf den Arm ausgeübt wird, die Kugel aus ihrer Aufnahme austreten kann und dabei ein Verschwenken der Platten relativ zueinander gestattet.

9. Gerät nach Anspruch 7, bei dem unter Berücksichtigung, dass die Sperrklinke (10) mit der Basis verbunden ist, um mit einem Zahnrad (9) zusammenzuwirken, das mit dem ersten Ende des Arms verbunden ist, der Drehmomentbegrenzer einen Reibring umfasst, der zwischen dem Zahnrad und der Achse angeordnet ist, auf der das Zahnrad montiert ist, wobei der Reibring derart ausgebildet ist, dass er ein maximales Drehmoment, das kleiner als ein vorbestimmter Wert ist, auf das Zahnrad überträgt.

10. Gerät nach Anspruch 1, bei dem ein Kraftsensor (19) an einem Segment (5.1) des Arms, das an das erste Ende angrenzt, montiert und mit einem Alarmelement (20) verbunden ist.

11. Gerät nach Anspruch 10, bei dem der Kraftsensor (19) derart ausgebildet ist, dass er eine Verformung des genannten Segments des Arms misst.

12. Gerät nach Anspruch 11, bei dem sich ein beweglicher Abschnitt (7.2) unter dem genannten Segment (5.1) parallel zu demselben erstreckt und dabei zu dem Segment beabstandet ist, wobei der Sensor zwischen dem beweglichen Abschnitt und dem Segment montiert ist, um eine Veränderung des Abstandes zwischen dem beweglichen Teil und dem Segment zu erfassen.

13. Gerät nach Anspruch 10, bei dem das Alarmelement mindestens eines der folgenden Elemente umfasst: ein akustisches Warnelement, eine Warnleuchte, ein vibrierendes Element, das an dem zweiten Ende des Arms montiert ist.

14. Gerät nach Anspruch 1, bei dem die Ausrückmittel derart ausgebildet sind, dass sie ein Einrücken der Sperrklinke verursachen können, und mit einem Sensor zur Erfassung einer vorbestimmten Nichtgebrauchsposition des Arms verbunden sind, um das Einrücken der Sperrklinke zu steuern, wenn der Arm in der Nichtgebrauchsposition ist.

15. Gerät nach Anspruch 1, bei dem das Gerät umfasst:
- einen ortsfesten Abschnitt (7.1), der starr an der Basis (1) befestigt ist; und
- einen beweglichen Abschnitt (7.2), der an dem ortsfesten Abschnitt (7.1) montiert ist, um sich um die horizontale Achse (A) zu verschwenken;
wobei die Positionssperrvorrichtung (6) ein Zahnrad (9) umfasst, das koaxial zur horizontalen Achse (A) und drehfest mit dem beweglichen Abschnitt (7.2) verbunden ist, und wobei die Sperrklinke (10) an dem ortsfesten Abschnitt (7.1) gelagert ist, um zwischen einer aktiven Position, in der die Sperrklinke zwischen zwei Zähnen des Zahnrades in Eingriff steht, um sich einer Bewegung des Arms (2) in die untere Position zu widersetzen, und einer inaktiven Position beweglich zu sein, in der die Sperrklinke (10) aus dem Zahnrad (9) ausgerückt ist.

16. Gerät nach Anspruch 15, umfassend einen Gelenkträger (7), wobei dieser Gelenkträger den genannten ortsfesten Abschnitt (5.1) und den genannten beweglichen Abschnitt (7.2) umfasst, wobei dieser bewegliche Abschnitt (7.2) an dem ortsfesten Abschnitt (7.1) gelagert ist, um sich unter einem ersten Segment (5.1) des Arms zu erstrecken, wobei dieses erste Segment (5.1) des Arms ein erstes Ende hat, das das genannte erste Ende (2.1) des Arms (2) bildet.

## Claims

1. Measuring device including a base (1) and an articulated arm (2) having a first end (2.1) of the articulated arm (2) and a second end (2.2) of the articulated arm (2), the second end (2.2) of the articulated arm (2) being provided with a pointing member (3), the first end (2.1) of the articulated arm being mounted on the base (1) to pivot about a horizontal axis (A), between a high position and a low position, the measuring device comprising a position locking device (6) comprising a pawl (10) mounted to oppose movement of the arm (2) toward the low position, the measuring device being **characterized in that** it comprises means for disengagement of the pawl (10), the position locking device (6) being connected to means for disengagement of the pawl (10) comprise an electromechanical actuator (12) connected to the pawl (10) by a mechanical transmission chain (13) to move the latter.

2. Device according to Claim 1, wherein the means for disengagement comprise a manual control button (11) electrically connected to the actuator (12) and mounted for example on the second end of the arm.

3. Device according to claim 2, wherein the means for disengagement comprise a manual control button (11) mounted on the base (1) and electrically connected to the actuator (12).

4. Device according to claim 1, wherein the electromechanical actuator is a piezoelectric actuator.

5. Device according to claim 1, wherein the electromechanical actuator (12) is an electromagnetic actuator.

6. Device according to claim 5, wherein the electromagnetic actuator belongs to the group of electromagnetic actuators comprising a solenoid, a stepper motor and a linear actuator.

7. Device according to claim 1, wherein the disengaging means comprise a torque limiter.

8. Device according to claim 7, wherein, the pawl (10) being connected to the base (1) to cooperate with a toothed wheel (9) connected to the first end of the arm, the torque limiter comprises a first plate (16) rotationally connected to the first end of the arm and a second plate (17) rotationally connected to the toothed wheel (9), the plates bearing elastically against each other, one of the plates including a housing for receiving at least one ball projecting from the other plate so that if a torque greater than a predetermined threshold is exerted on the arm, the ball can leave its housing, allowing pivoting of the plates relative to each other.

9. Device according to claim 7, wherein, the pawl (10) being connected to the base to cooperate with a toothed wheel (9) connected to the first end of the arm, the torque limiter comprises a friction ring interleaved between the toothed wheel and the shaft on which the toothed ring is mounted, the friction ring being adapted to transmit to the toothed wheel a maximum torque less than a predetermined value.

10. Device according to claim 1, wherein a force sensor (19) is mounted on a segment (5.1) of the arm adjacent the first end and is connected to an alert member (20).

11. Device according to claim 10, wherein the force sensor (19) is adapted to measure deformation of said segment of the arm.

12. Device according to claim 11, wherein a mobile part (7.2) lies under said segment (5.1) parallel thereto, being away from the segment, the sensor being mounted between the mobile part and the segment to detect a variation of the distance between the mobile part and the segment.

13. Device according to claim 10, wherein the alert member comprises at least one of the following elements: an audible warning device, a luminous warning device, a vibrating element mounted on the second end of the arm.

14. Device according to claim 1, wherein the disengaging means are adapted to cause engagement of the pawl and are connected to a sensor for detection of a predetermined position of non-use of the arm to command the engagement of the pawl when the arm is in the non-use position.

15. Device according to claim 1, wherein the device comprises:
- a fixed part (7.1) rigidly fixed to the base 1; and
- a mobile part (7.2) mounted on the fixed part (7.1) to pivot about the horizontal axis (A), the position locking device (6) comprising a toothed wheel (9) coaxial with the axis (A) and constrained to rotate with the mobile part (7.2) and the pawl (10) being mounted on the fixed part (7.1) to be mobile between an active position in which the pawl is engaged between two teeth of the toothed wheel to oppose movement of the arm (2) toward the low position and an inactive position in which the pawl (10) is disengaged from the toothed wheel (9).

16. Device according to claim 15, comprising an articulated armature (7), this articulated armature including said fixed part (7.1) and said mobile part (7.2), this mobile part (7.2) being mounted on the fixed part (7.1) to lie under a first segment (5.1) of the arm, the first segment (5.1) of the arm having a first end constituting said first end (2.1) of the arm (2).
